Europäisches Patentamt

European Patent Office

Office européen des brevets

(11) Publication number: **0 203 624**
**A1**

## (12) EUROPEAN PATENT APPLICATION

(21) Application number: 86200365.4

(22) Date of filing: 10.03.86

(51) Int. Cl.⁴: **H 02 K 15/095**

(30) Priority: 24.04.85 IT 2163085 U

(43) Date of publication of application: 03.12.86
Bulletin 86/49

(84) Designated Contracting States: CH DE FR GB LI SE

(71) Applicant: AXIS S.p.A., I-50028 Tavarnelle Val di Pesa Firenze (IT)

(72) Inventor: Luciani, Sabatino, Via di Querceto, 169, I-50019 Sesto Fiorentino (Firenze) (IT)

(74) Representative: Lotti, Giorgio, c/o Ing. Barzanò & Zanardo Milano S.p.A. Via Cernaia 20, I-10122 Torino (IT)

(54) **Winding forms for electric motor stators, integral with the insulating headers.**

(57) An electric motor stator (10) in which, from its insulating headers, there extend appendices (14) which are constructed integrally with said headers to define the forms for winding the copper wire (11) into the stator slots (13); said forms (14) being removable by cutting them from the headers when the winding has been formed.

- 1 -

DESCRIPTION

The invention relates to winding forms for electric motor stators, integral with the insulating header.

Machines for forming stator windings are known in which a needle driven with rectilinear reciprocating motion combined with reciprocating rotary motion about its axis unwinds at least one copper wire from a reel in order to deposit in the stator armature slot. The needle has one point if only one winding is to be formed, or two opposing points if both the windings are to be formed simultaneously.

In the case of a stator with two opposing windings, winding forms, also known as shoes, are applied to the ends of the respective slots, and are of such a shape as to accompany the copper wire and the needle into the slot, when the needle rotates external to the stator.

These shoes, which are of steel or other suitable metal material, have a basic and specific purpose in that the needle is coaxial to the stator axis and thus its point is unable to pass beyond the end of the winding retention tooth during its rotation beyond the inner diameter of the stator, so that if the shoe is not used, the copper wire cannot wind on to the slot beyond the retention tooth. If the retention tooth did not exist, only a few turns could be deposited, and they would represent only a small percentage of those required. In addition to the need to construct these shoes accurately, they must also be properly sized for each stator to be constructed, even though they represent an element which forms no part of the final product. In this respect, the shoes are removed by two devices when the winding has been formed.

0203624.

- 2 -

In addition, four tensioning devices have to be set up to hold the shoes rigidly against the stator during the forming stage, and to enable them to be rapidly released from it when the formation is complete.

The object of the invention is to propose winding forms or shoes constructed integrally with the insulating stator header. By this concept, which can be used on any type of traditional wound stator on traditional machines, the use of devices for pulling the shoes against the stator pack is unnecessary.

A great advantage of the proposed concept is that it is no longer necessary to set up steel winding forms and all the pulling and release devices associated therewith each time for each individual winding machine. In this respect, the winding forms are shaped for each stator on which they are assembled before forming the winding. Moreover, as each group of forms for each stator is used only for them and is subsequently removed when the winding has been formed, the forms do not become worn with time and therefore do not have to be replaced or overhauled.

These and further objects which will be more apparent hereinafter are attained according to the invention by an electric motor stator characterised in that there extend from its insulating headers appendices which are constructed integrally with said headers to define the forms for winding the copper wire into the stator slots; said forms being removable by cutting them from the headers when the winding has been formed.

The subject of the invention is described hereinafter with reference to the accompanying drawings in which:

Figure 1 is an axial section through a stator with winding forms according to the invention;

Figure 2 is a partial plan view of the stator of Figure 1.

A two-pole stator of traditional type comprises a hollow stator pack 10 in which there are provided slots on to which the copper wire 11 is wound to form the winding.

From the ends of the stator pack 10 there also extend insulating headers 12 which define further slots 13 which receive the copper wire wound into the two adjacent slots of each stator pole.

According to the invention, from the headers 12 there extend the winding forms 14, which are constructed integrally with said headers and are of the same configuration as the traditional steel shoes designed to facilitate the seating of the wire 11 in the slots 13 during formation of the winding.

Obviously, for each stator the shoes 14 will have the most suitable configuration for facilitating the seating of the wire 11 into the respective slots 13 beyond the retention tooth 15.

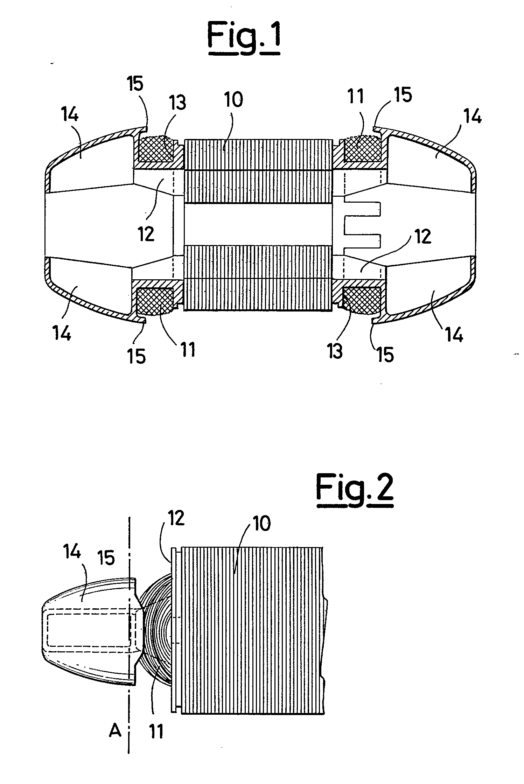

When the winding has been terminated in the traditional manner, the forms 14, which are no longer necessary, are cut off, for example along the line A of Figure 2, so as to obtain an insulating header 12 of traditional type without the shoulders and appendices 14, which are not necessary for the use of the finished stator.

0203624

- 4 -

PATENT CLAIMS

1.     An electric motor stator characterised in that there extend from its insulating headers appendices which are constructed integrally with said headers to define the forms for winding the copper wire into the stator slots; said forms being removable by cutting them from the headers when the winding has been formed.

2.     A stator as claimed in claim 1, characterised in that the appendices are cut away at the ends of the headers from which said appendices extend.

0203624

**Fig.1**

**Fig.2**

0203624

| Category | Citation of document with indication, where appropriate, of relevant passages | Relevant to claim | CLASSIFICATION OF THE APPLICATION (Int. Cl.4) |
|---|---|---|---|
| X | EP-A-0 040 115 (SEB S.A.) * page 7, lines 1-21; figures 1-7 * | 1,2 | H 02 K 15/095 |
| A | FR-A-2 324 143 (CONSOLIDATED FOODS CORP.) * page 2, line 23 - page 3, line 14; figures 1-5 * | 1 | |
| A | DE-A-2 849 212 (SIEMENS AG) * page 6, lines 8-35; figure 1 * | 1 | |

**DOCUMENTS CONSIDERED TO BE RELEVANT**

TECHNICAL FIELDS SEARCHED (Int. Cl.4)

H 02 K 15/00

The present search report has been drawn up for all claims

| Place of search | Date of completion of the search | Examiner |
|---|---|---|
| BERLIN | 04-07-1986 | WEIHS J.A. |